# EUROPEAN PATENT APPLICATION

(11) **EP 3 878 778 A1**
(43) Date of publication of application: **15.09.2021**
(21) Application number: 21161330.2
(22) Date of filing: 08.03.2021
(51) Int. Cl.: B65G 47/51

(54) **CONVEYANCE APPARATUS**

(30) Priority: 09.03.2020 IT 202000004861
(71) Applicant: Marini, Mervino, 47922 Rimini (IT)
(72) Inventor: MARINI, Mervino, 47922 RIMINI (IT); BARTOLINI, Stefano, 47922 RIMINI (IT)
(74) Representative: Modiano, Micaela Nadia

(57) **Abstract**

A conveyance apparatus (1) designed to be interposed between a conveyance element (2) for products (X, Y, Z) and a temporary storage assembly (3) for these products, and also comprising a guiding channel (4) for the products (X, Y, Z). The apparatus (1) comprises: a sliding carriage (5), slid by the action of a respective actuator (6) along a predefined portion of the conveyance element (2); at least one first angular element (9), provided with a concave motorized conveyance surface (10), and at least one second angular element (11), provided with a convex motorized conveyance surface (12), which face each other and are mutually proximate the guiding channel (4) is defined between the concave conveyance surface (10) of the at least one first angular element (9) and the convex conveyance surface (11) of the at least one second angular element (12); the carriage (5) comprises at least one first receptacle (13) for the at least one first angular element (9) and at least one second receptacle (14) for the at least one second angular element (11); at least one first motor drive unit (15) which is integral with the carriage (5) is associable with the at least one first angular element (9) for the movement of the concave motorized conveyance surface (10) and at least one second motor drive unit which is integral with the carriage (5) is associable with the at least one second angular element (11) for the movement of the convex motorized conveyance surface (12).

## Description

The present invention relates to a conveyance apparatus for products.

The operations to produce and package a plurality of products require their transfer from different areas of the operational production facility used for such operations.

It is common for some steps of the process to require different times than the further steps that are carried out in parts of the production facility arranged upstream and/or downstream.

In this case it can become necessary to create temporary storage areas (known as "logistic buffers") that make it possible to adapt the operating times of different parts of the production facility.

In such context it is extremely useful to maintain a specific order of the products, corresponding to the order in which they were supplied to the temporary storage area (logistic buffer), so as to obtain an optimal continuity of the production and/or packaging process.

The use is known of conveyance assemblies that can be integrated perfectly in respective temporary storage areas (logistic buffers) such as those described in the European patent application EP3003924.

Such technical solutions, however, present some problems relating to the conveyance of delicate products.

In particular, when conveying jars, bottles, flacons and the like that have already had labels applied to their surfaces, the subsequent conveyance requires that the conveyance elements do not make contact with the labels in order to not damage them.

The known solutions propose structural architectures that make it possible to process specific products with labels arranged in zones thereof that are well-defined, but are not easily adaptable to variations of format.

The difficulties relating to changing format are furthermore evident if it becomes necessary to change the type of products conveyed, since the variations in height and/or in width and/or in shape require a complex reconfiguration of the entire conveyance assembly, which generally translates into long interruptions of the operation of the entire production facility (and therefore costly interruptions of production).

Furthermore a typical problem of conventional machines must be emphasized, relating to the difficulty of adequately handling products that are very tall and slim (and more prone to falling over during their handling): this problem requires the presence of operators to constantly monitor the production facility in order to intervene to set such products upright (something that happens frequently with slim bottles and/or containers).

The principal aim of the present invention is to solve the above-mentioned drawbacks, by providing a conveyance apparatus that can handle products with a delicate surface, without damaging them.

Within this aim, an object of the invention is to provide a conveyance apparatus that allows easy and rapid change of format operations.

Another object of the invention is to provide a conveyance apparatus that makes it possible to convey products, of different types, shapes and dimensions, with delicate surfaces without damaging them, by way of simple and rapid reconfiguration operations.

Another object of the invention is to provide a conveyance apparatus that is suitable for the conveyance of tall and/or slim products, while guarding against the risk of falling and/or overturning of each product.

Another object of the present invention is to provide a conveyance apparatus that is low-cost, easily and practically implemented and safe in use.

This aim and these and other objects which will become more apparent hereinafter, are achieved by a conveyance apparatus of the type designed to be interposed between a conveyance element for products and a temporary storage assembly for said products and comprising a guiding channel for said products, characterized in that it comprises:
- a sliding carriage, slid by the action of a respective actuator along a predefined portion of said conveyance element;
- at least one first angular element, provided with a concave motorized conveyance surface, and at least one second angular element, provided with a convex motorized conveyance surface, which face each other and are mutually proximate, said guiding channel being defined between said concave conveyance surface of the at least one first angular element and said convex conveyance surface of the at least one second angular element;
- said carriage comprising at least one first receptacle for the at least one first angular element and at least one second receptacle for the at least one second angular element;
- at least one first motor drive unit which is integral with said carriage being associable with said at least one first angular element for the movement of said concave motorized conveyance surface and at least one second motor drive unit which is integral with said carriage being associable with said at least one second angular element for the movement of said convex motorized conveyance surface.

Further characteristics and advantages of the invention will become more apparent from the detailed description that follows of a preferred, but not exclusive, embodiment of the conveyance apparatus according to the invention, which is illustrated by way of non-limiting example in the accompanying drawings wherein:
Figure 1 is a schematic perspective view of a portion of a line for conveying and accumulating products, which comprises two conveyance apparatuses according to the invention;

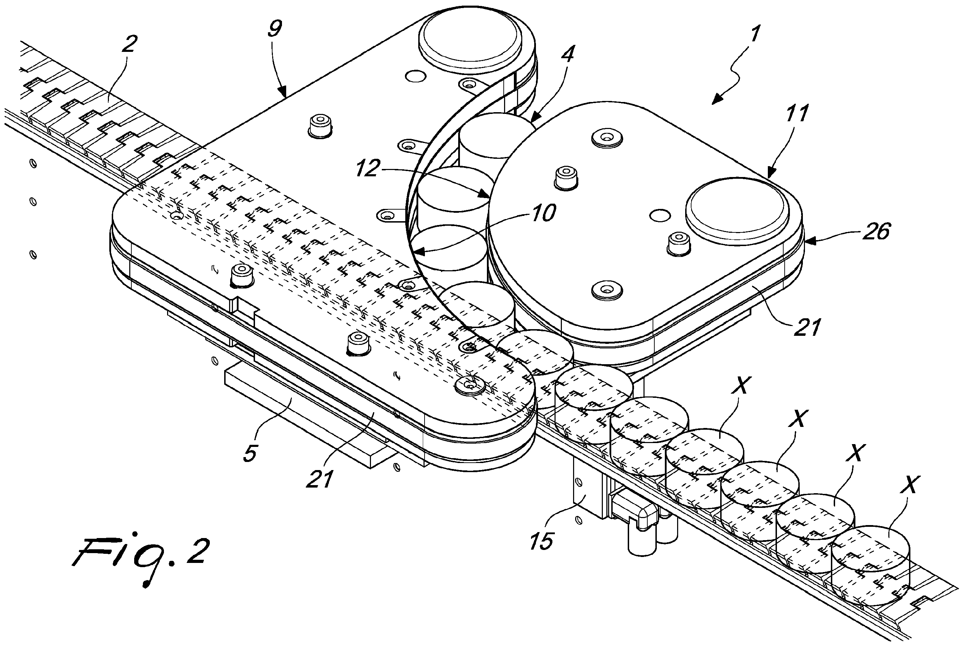

Figure 2 is a schematic perspective view of a conveyance apparatus according to the invention in a first operating configuration;

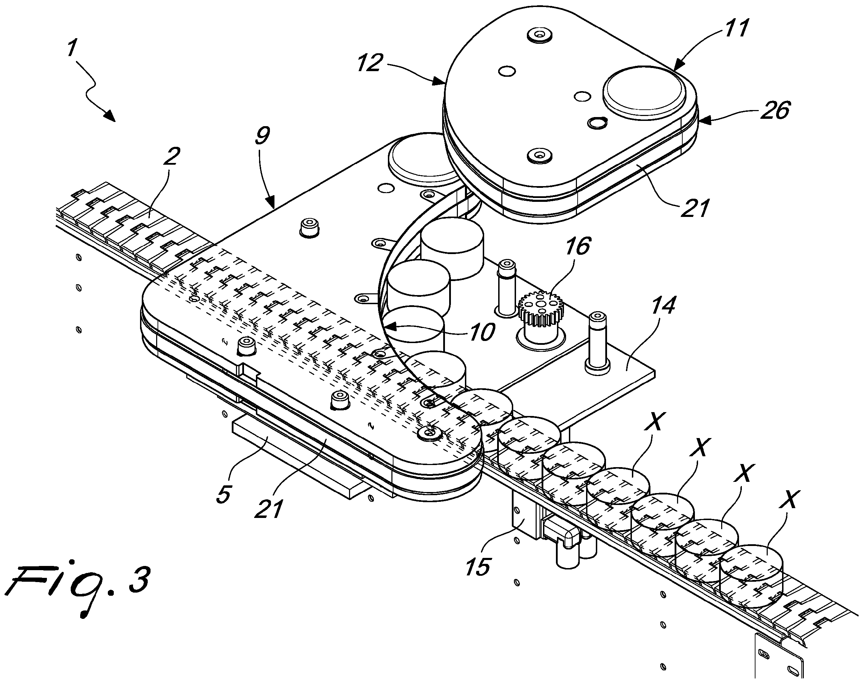

Figure 3 is a schematic perspective view of the apparatus of Figure 2 during the disassembly of a component thereof;

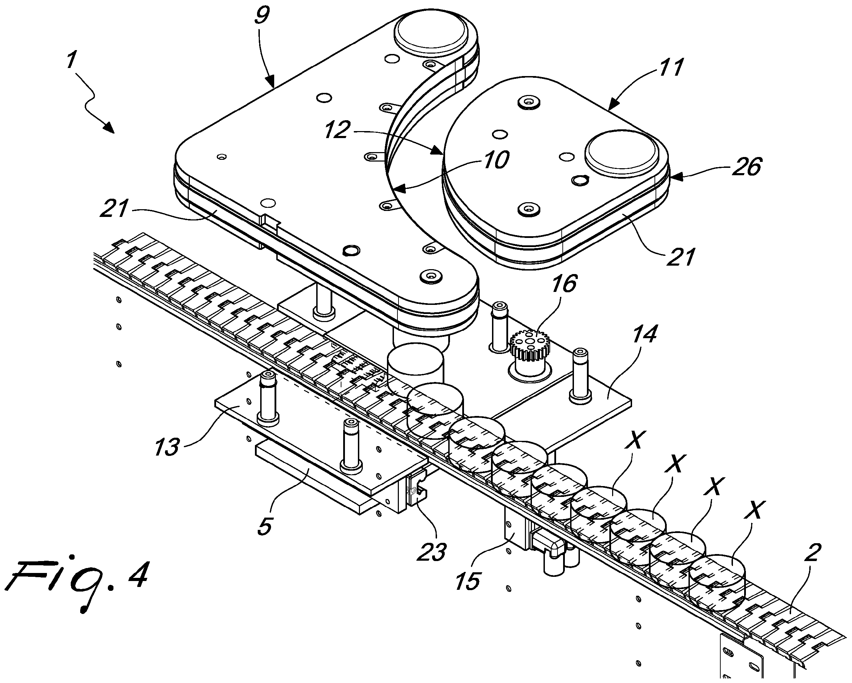

Figure 4 is a schematic perspective view of the apparatus of Figure 2 during the disassembly of two components thereof;

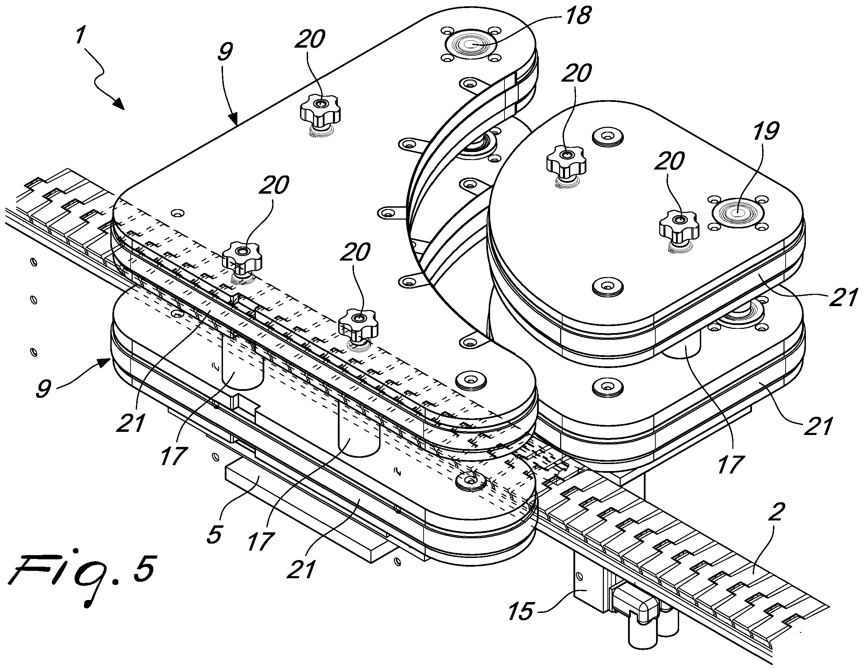

Figure 5 is a schematic perspective view of a conveyance apparatus according to the invention in a second operating configuration;

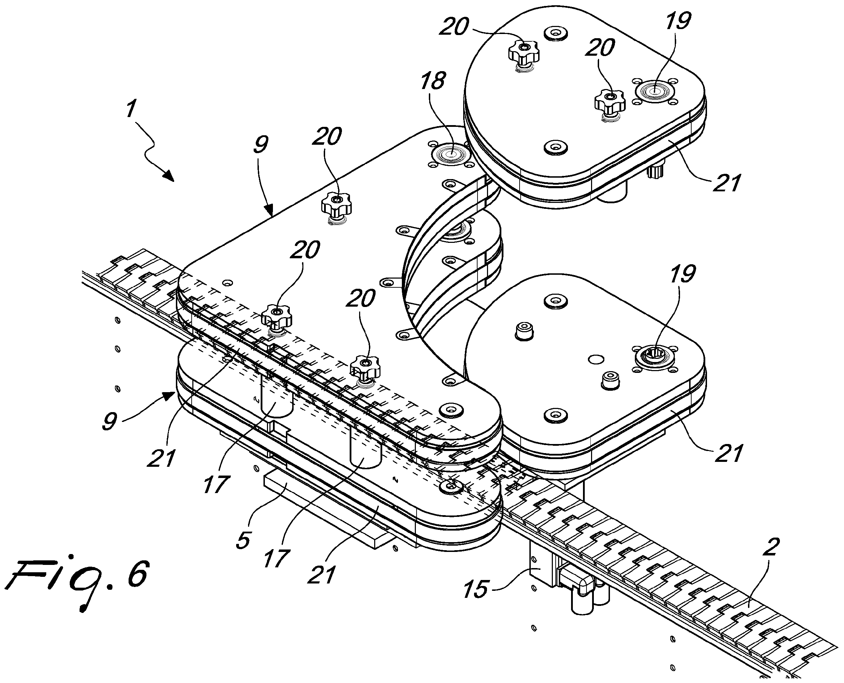

Figure 6 is a schematic perspective view of the apparatus of Figure 5 during the disassembly of a component thereof;

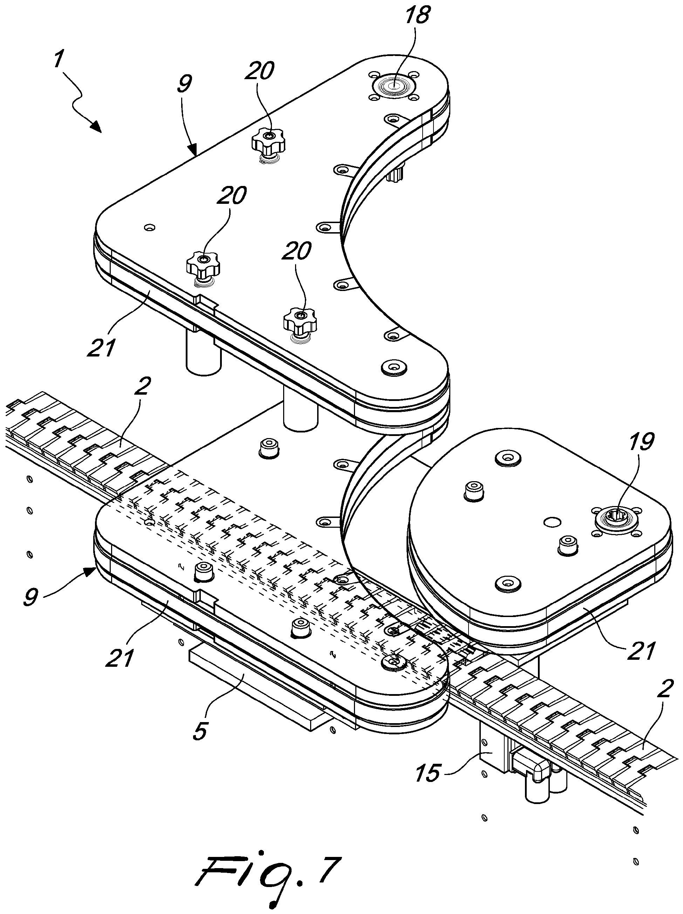

Figure 7 is a schematic perspective view of the apparatus of Figure 6 during the disassembly of a further component;

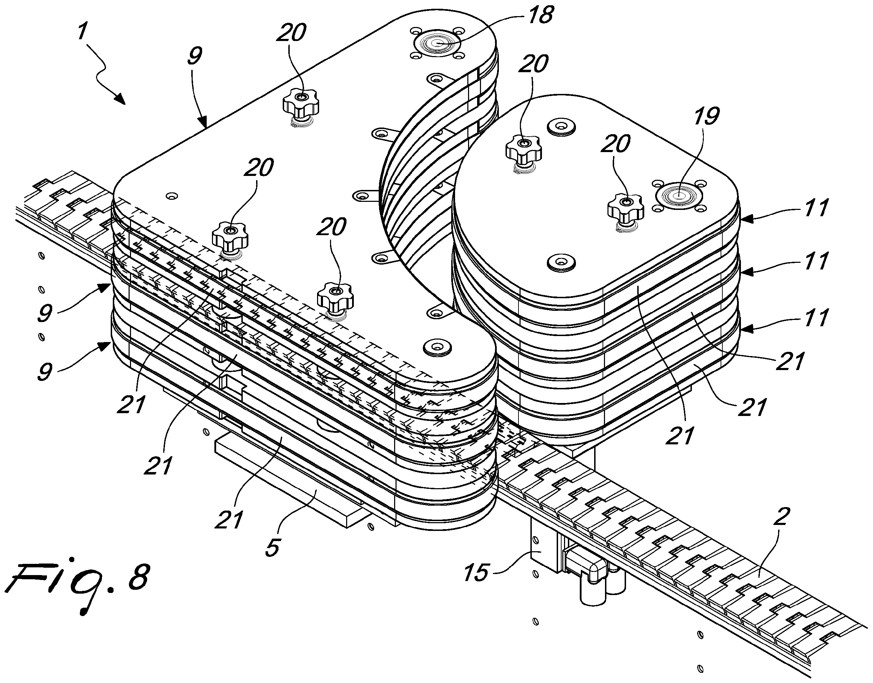

Figure 8 is a schematic perspective view of a conveyance apparatus according to the invention in a third operating configuration;

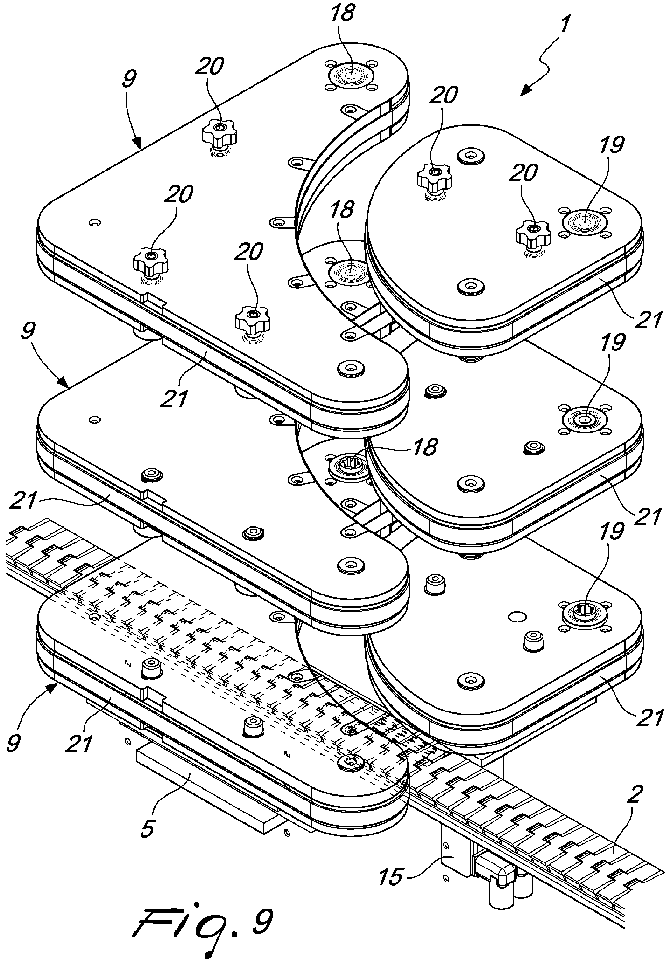

Figure 9 is a schematic perspective view of the apparatus of Figure 8 during the disassembly of some components thereof;
Figure 10 is a schematic perspective view of a conveyance apparatus according to the invention in a fourth operating configuration which defines a guiding channel for products of narrow width;
Figure 11 is a schematic perspective view of the conveyance apparatus of Figure 2 defining a guiding channel for products the width of which is considerable with respect to the height;
Figure 12 is a schematic perspective view of a conveyance apparatus according to the invention in a fifth operating configuration which defines a guiding channel for bottles and, in general, products that are tall and slim.

With reference to the figures, the reference numeral 1 generally designates a conveyance apparatus of a facility A for processing products X, Y, Z.

The conveyance apparatus 1 according to the invention is designed to be interposed between a conveyance element 2 for products X, Y, Z and a temporary storage assembly 3 for those products.

On the apparatus 1 a guiding channel 4 is defined for the products X, Y, Z that it conveys during its operation.

The conveyance apparatus according to the invention comprises a sliding carriage 5, slid by the action of a respective actuator 6 along a predefined portion of the conveyance element 2.

The conveyance element 2 can be advantageously constituted by a conveyor belt wherein the products X, Y, Z will be placed on the surface of a belt or of a track, conveniently motorized by way of a driving sprocket associated with a shaft that can be connected to a motor.

The conveyor belt will be supported by a respective frame 8, with respect to a part of which the carriage 5 will be able to slide.

The apparatus 1 according to the invention further comprises positively at least one first angular element 9, provided with a concave motorized conveyance surface 10, and at least one second angular element 11, provided with a convex motorized conveyance surface 12, which face each other and are mutually proximate.

The guiding channel 4 is defined between the concave conveyance surface 10 of the at least one first angular element 9 and the convex conveyance surface 12 of the at least one second angular element 11.

It should furthermore be noted that the carriage 5 will conveniently be able to comprise at least one first receptacle 13 for accommodating the at least one first angular element 9 and at least one second receptacle 14 for the at least one second angular element 11.

It should furthermore be noted that according to the invention there will be at least one first motor drive unit 15 which is integral with the carriage 5 (in particular, coupled to the lower surface thereof).

Such first motor drive unit 15 will in turn be connectable (in particular its driving shaft) to the at least one first angular element 9 for the movement of the respective concave motorized conveyance surface 10.

Similarly, at least one second motor drive unit (not visible in the accompanying figures but of a type similar to that explained in the previous paragraph) will be integral with the carriage 5 and connectable to the at least one second angular element 11 for the movement of the convex motorized conveyance surface 12.

The driving shaft of the motor drive unit (both the unit 15 and the unit not visible in the accompanying figures and intended for the movement of the convex surface 12) will be connected to the upper surface of the carriage and will be coupled to a respective pinion 16 (in particular the pinion 16 is the one designed for the movement of the convex surface 12 of the element 11).

The motor drive unit (both the unit 15 and the unit not visible in the accompanying figures and intended for the movement of the convex surface 12) will be controlled by a single computer in order to ensure that each product X, Y, Z that enters the guiding channel 4 is entrained at the same speed by the respective surfaces 10 and 12 that delimit the channel itself.

With particular reference to an embodiment of undoubted practical and applicative interest, the first angular elements 9 are at least two in number, and can be mutually stacked, optionally with the interposition of spacer elements 17: the presence of spacer elements 17 of different length will make it possible to maintain a predefined center distance between the lower first element 9 and the upper one, thus making possible the desired alignment of the respective concave surfaces 10 with specific portions of the surface of the respective product X, Y, Z on which they abut.

Each first element 9 will conveniently comprise, in order to facilitate the operative stacking of further first elements 9, at least one respective upper transmission shaft 18 which can be coupled mechanically to the concave motorized conveyance surface 10 of the upper first element, thus transferring the motor torque delivered by the at least one first motor drive unit 15 which is integral with the carriage 5.

Similarly, the second angular elements 11 can be at least two in number, and can be mutually stacked, optionally with the interposition of spacer elements 17 (which are adapted to perform the same function described previously).

In this case too each second element 11 will profitably comprise at least one respective upper transmission shaft 19 for the mechanical coupling of the convex motorized conveyance surface 12 (of the upper second element 11) to the respective second motor drive unit which is integral with the carriage.

In order to ensure the stability of each specific operating configuration of the elements 9 and 11 (optionally stacked in any number of layers), the apparatus 1 according to the invention can advantageously comprise means 20 for the detachable coupling of the angular elements 9 and 11 to the respective receptacles 13 and 14 of the carriage 5.

In the accompanying figures the means 20 for detachable coupling are nuts that can be tightened manually on respective threaded bars: the possibility is not ruled out of adopting different implementation solutions, conventional or designed specifically to fulfill this purpose.

In particular, if the means 20 for detachable coupling are intended for the mutual coupling of at least two angular elements 9, 11 which are mutually superimposed, wherein each lower angular element 9, 11 is arranged in the respective receptacle 13, 14 of the carriage 5, then the spacer elements 17 are interposed between the superimposed angular elements 9, 11.

In such case each threaded bar to which tightening nuts will be coupled will pass through the lower element 9, 11, the spacer elements 17 and upper element 9, 11.

The adoption of tightening nuts with grip knobs makes it possible to simplify the operations of assembly and disassembly, thus ensuring that they can be carried out manually, without needing to use to special tools.

The particular shape of the elements 9 and 11 is dependent on the angular extent between the conveyance element 2 and the temporary storage assembly 3 between which they are interposed: in particular the concave motorized conveyance surface 10 and the convex motorized conveyance surface 12 can positively be shaped like a circumferential arc and have an angular extent comprised between 45° and 135°. The possibility is not ruled out of adopting elements 9 and 11 wherein the respective conveyance surface 10 and 12 has an angular extent greater than or less than the preferred range indicated previously: in particular an implementation solution that is certainly of interest has the angular extent of 180°, for the purpose of using the apparatus 1 according to the invention for inverting the motion of the products X, Y, Z.

The accompanying figures show embodiments wherein the conveyance element 2 is perpendicular to the temporary storage assembly 3: in such context the angular extent of the conveyance surfaces 10 and 12 of the elements 9 and 11 will be 90°.

With particular reference to an embodiment of undoubted applicative interest, each angular element 9, 11 can profitably comprise a sliding perimetric belt 21, mechanically coupled to a respective motor drive unit (both the unit 15 and the unit that is not visible in the accompanying figures and intended for the movement of the convex surface 12) for its entrainment.

Each belt 21 of each angular element 9, 11 will therefore be positively suitable, at the respective motorized conveyance surface 10, 12, for abutment against the surface of a product X, Y, Z for its entrainment.

Optional belts 21 made of soft material (or provided with surface contact bands made of soft material) will positively be able to abut against the surface of delicate products without damaging them in any way.

It should furthermore be noted that each belt 21 of each angular element 9, 11, at the respective motorized conveyance surface 10, 12, will be aligned with and will abut against a portion of the surface of the product X, Y, Z to be conveyed that is not subject to abrasion.

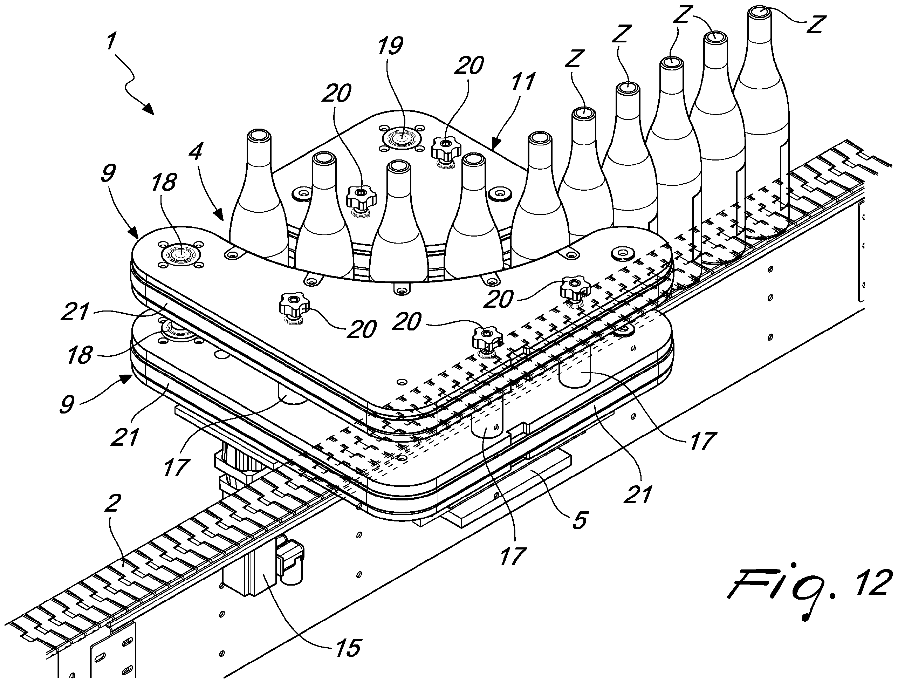

By way of example, Figure 12 shows that the products Z conveyed can even be bottles: these generally have printed labels applied on their surfaces which are prone to abrasion (being generally made of paper, they readily deteriorate as a result of rubbing on other surfaces).

For this reason the adoption of pairs of stacked angular elements 9, 11, between which respective spacer elements 17 are interposed, will make it possible to avoid having the belts 21 abutting against the label of the bottle, because they are aligned with the portions in glass of that bottle, which are located above and below the label. In this manner a correct conveyance of the products Z is ensured, without causing any damage to the labels on them.

The predefined portion of the conveyance element 2 on which the carriage 5 can slide comprises a track 22 fixed to the frame 8 of the conveyance element 2.

The carriage 5 comprises a slider 23 the shape and dimensions of which are complementary to a part of the profile of the track 22: the actuator 6 for moving the carriage 5 along the track 22 will conveniently comprise a controlled motor 24 and a transmission element 25 which is coupled to the motor 24 and to the carriage 5.

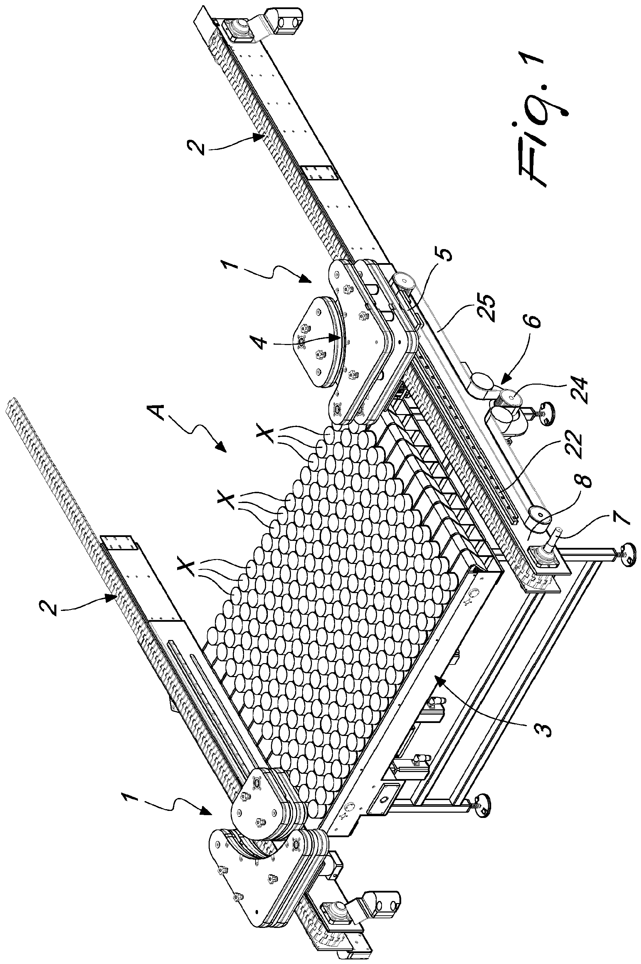

The transmission element 25 can be, in conformance with what is illustrated by way of non-limiting example in Figure 1, a belt, although the possibility is not ruled out of using chains, toothed belts, rack-and-pinion pairs and the like.

A particularly relevant innovative aspect of the present invention lies in the possibility of being able to easily adapt it to products of various shapes and sizes, in an entirely new manner compared to what happens with similar, conventional devices that require complex interventions by specialist technicians whenever a change of format becomes necessary.

It should be noted that the second angular elements 11 can positively be produced in various formats: such second angular elements 11 of various formats will all have an identical shape, but differ in the radii of curvature of the corresponding convex motorized conveyance surface 12.

More specifically, the different radii of curvature will determine different space occupations in a radial direction with respect to the corner 26 that lies opposite the convex motorized surface 12.

The various formats of the elements 11 (together with the concave motorized conveyance surface 10 of the corresponding first angular element 9) will therefore be capable of defining different guiding channels of different width for products X, Y, Z of various dimensions.

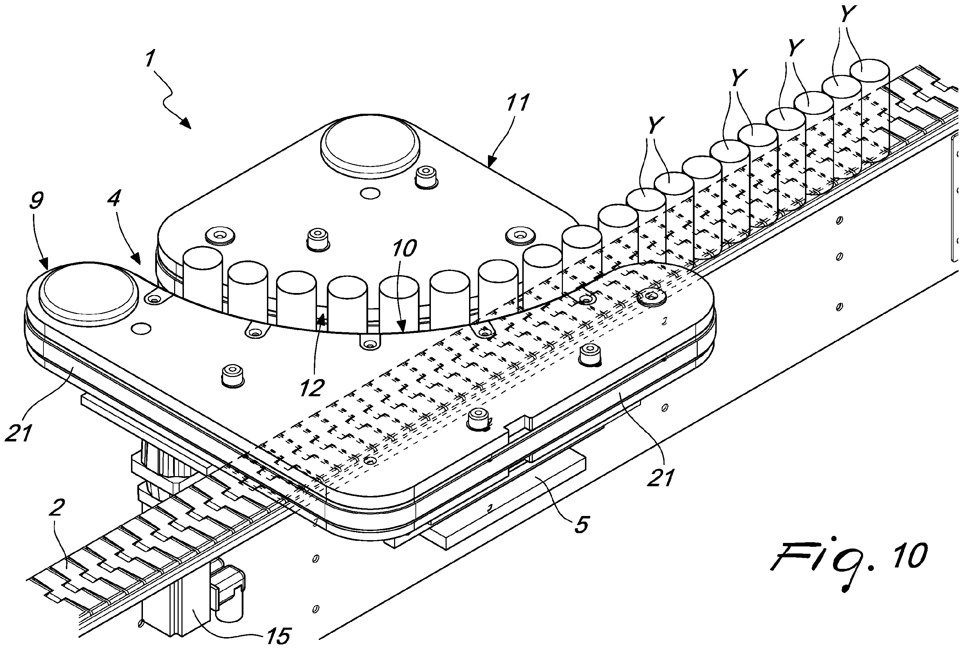

By way of example, the accompanying Figure 10 shows an apparatus 1 in which a large-format second angular element 2 is used, which is therefore adapted to define a narrow guiding channel 4, within which it will be possible to convey products of low thickness.

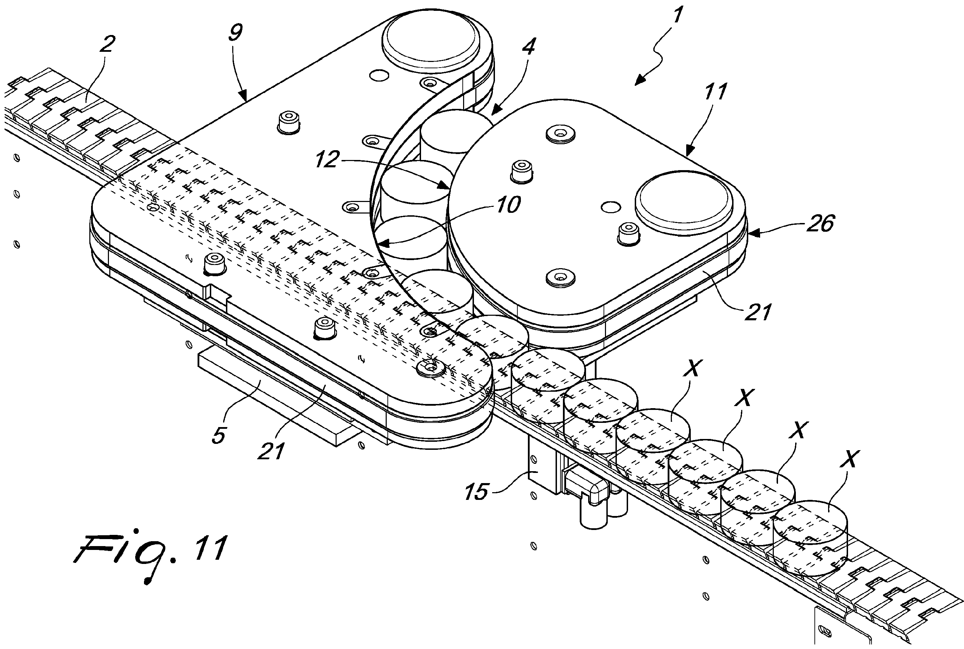

By contrast, the accompanying Figure 11 shows an apparatus 1 in which a large-format second angular element 2 is used, which is therefore adapted to define a wide guiding channel 4, within which it will be possible to convey products X of great thickness.

By virtue of the apparatus 1 according to the invention, it is possible to receive products X, Y, Z from the conveyance element 2 and transfer them to the temporary storage assembly 3 (or vice versa), while keeping them correctly aligned and ensuring their order is maintained (for the purpose of allowing the adoption of specific entry/exit orders of the products X, Y, Z, such as for example those identified by the acronyms LIFO, FIFO and the like).

The movement of the carriage 5 along the track 22 makes it possible to unload the products X, Y, Z in the magazine 3 (or retrieve them from it) according to a preset order.

The belts 21 present on the concave and convex surfaces 10 and 12 that delimit the guiding channel 4 will ensure the entrainment of the products X, Y, Z without modifying the alignment thereof (the belts will have a law of motion that enables a simple translation of the products X, Y, Z).

The present invention will be distinguished from the conventional solutions by the possibility of adapting it to any type of product X, Y, Z, by way of simple format change operations that will not require the intervention of specialist technicians.

In fact the width of the guiding channel 4 can be varied simply by substituting the second angular element 11 present with another of different format: such operation will be very simple since, after removing the nuts (preferably knob-shaped) of the locking means 20, the second angular element 11 can be lifted out and substituted with the element of different format.

Similarly, if products of great height (such as for example the products Z, of the type of bottles and the like) are to be processed, multiple angular elements 9, 11 can be stacked until a guiding channel 4 is provided of the height required to ensure the perfect stability of the conveyed products.

A similar result is also obtainable using only two superimposed layers of angular elements 9 and 11, between which spacer elements 17 of the appropriate height are interposed.

The adoption of spacer elements 17 furthermore makes it possible to align the belts 21 of each element 9, 11 with portions of the product X, Y, Z that are not prone to wear, i.e. along which the belt can make contact without causing any damage.

It should be noted that all the format changes (owing to the presence, or otherwise, of the spacer elements between the angular elements 9, 11, or to the stacking, or otherwise, of multiple angular elements 9, 11, or to the presence of elements 11 of different dimensions) will be immediately identifiable by a respective management and control unit of the conveyance apparatus 1, which will automatically be capable of adapting its operation to the new operating configuration, without the need for external adjustment (the software that governs the apparatus 1 makes it possible to place these structural modifications of change of format in a "plug-and-play" manner, without needing to intervene via the compilation of new algorithms as occurs in conventional machines).

Advantageously the present invention solves the above mentioned problems, by providing a conveyance apparatus 1 that can handle products X, Y, Z with a delicate surface, without damaging them. As seen, in fact, the belts 21 can be made to abut only against the less delicate parts of the product X, Y, Z to be conveyed, simply by adopting spacer elements 17 or by superimposing multiple layers of angular elements 9 and 11.

Conveniently the conveyance apparatus 1 according to the invention enables easy and rapid operations to change format, given that the substitution of the angular elements 9, 11 (in particular the elements 11) is simple and intuitive, and can even be done without needing to resort to the use of tools.

Profitably the conveyance apparatus 1 according to the invention makes it possible to convey products X, Y, Z of different types, shapes and dimensions, also with delicate surfaces (in such case without damaging them), by way of simple and rapid reconfiguration operations.

Positively the conveyance apparatus 1 is suitable for the conveyance of tall and/or slim products Y, Z, while guarding against the risk of falling and/or overturning of each product Y, Z: this is made possible by virtue of the possible stratification of the angular elements 9, 11.

Positively the present invention makes it possible to provide a conveyance apparatus that is low-cost and easily and practically implemented: such characteristics make the apparatus 1 according to the invention an innovation that is certain to be safe in use.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

The disclosures in Italian Patent Application No. 102020000004861 from which this application claims priority are incorporated herein by reference.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A conveyance apparatus of the type designed to be interposed between a conveyance element (2) for products (X, Y, Z) and a temporary storage assembly (3) for said products and comprising a guiding channel (4) for said products (X, Y, Z), **characterized in that** it comprises:
- a sliding carriage (5), slid by the action of a respective actuator (6) along a predefined portion of said conveyance element (2);
- at least one first angular element (9), provided with a concave motorized conveyance surface (10), and at least one second angular element (11), provided with a convex motorized conveyance surface (12), which face each other and are mutually proximate, said guiding channel (4) being defined between said concave conveyance surface (10) of the at least one first angular element (9) and said convex conveyance surface (12) of the at least one second angular element (11);
- said carriage (5) comprising at least one first receptacle (13) for the at least one first angular element (9) and at least one second receptacle (14) for the at least one second angular element (11);
- at least one first motor drive unit (15) which is integral with said carriage (5) being associable with said at least one first angular element (9) for the movement of said concave motorized conveyance surface (10) and at least one second motor drive unit which is integral with said carriage (5) being associable with said at least one second angular element (11) for the movement of said convex motorized conveyance surface (12).

2. The apparatus according to claim 1, **characterized in that** said first angular elements (9) are at least two in number, can be mutually stacked, optionally with the interposition of spacer elements (17), each first element (9) comprising at least one respective upper transmission shaft (18) for the mechanical coupling of said concave motorized conveyance surface (10) of the upper first element (9) to the at least one first motor drive unit (15) which is integral with said carriage (5).

3. The apparatus according to claim 1, **characterized in that** said second angular elements (11) are at least two in number, can be mutually stacked, optionally with the interposition of spacer elements (17), each second element (11) comprising at least one respective upper transmission shaft (19) for the mechanical coupling of said convex motorized conveyance surface (12) of the upper second element (11) to the at least one second motor drive unit which is integral with said carriage (5).

4. The apparatus according to claim 1, **characterized in that** it comprises means (20) for the detachable coupling of said angular elements (9, 11) to said respective receptacles (13, 14) of said carriage (5).

5. The apparatus according to claim 4, **characterized in that** it comprises means (20) for the detachable coupling of at least two said angular elements (9, 11) which are mutually superimposed, wherein said lower angular element (9, 11) is arranged in the respective receptacle (13, 14) of said carriage (5), optionally with the interposition of said spacer elements (17) between said superimposed angular elements (9, 11).

6. The apparatus according to claim 1, **characterized in that** said concave motorized conveyance surface (10) and said convex motorized conveyance surface (12) are shaped like a circumferential arc and have an angular extent comprised between 45° and 135°.

7. The apparatus according to one or more of the preceding claims, **characterized in that** each said angular element (9, 11) comprises a sliding perimetric belt (21), which is coupled mechanically to a respective motor drive unit (15) for its entrainment, each belt (21) of each angular element (9, 11) being suitable, at the respective motorized conveyance surface (10, 11), for abutment against the surface of a product (X, Y, Z) for its entrainment.

8. The apparatus according to claim 7, **characterized in that** each belt (21) of each angular element (9, 11), at the respective motorized conveyance surface (10, 12), is aligned with and abuts against a portion of the surface of the product (X, Y, Z) to be conveyed that is not subject to abrasion.

9. The apparatus according to one or more of the preceding claims, **characterized in that** said predefined portion of said conveyance element (2) on which said carriage (5) can slide comprises a fixed track (22), said carriage (5) comprises a slider (23) the shape and dimensions of which are complementary to part of the profile of said track (22), said actuator (6) for moving said carriage (5) along said track (22) comprising a controlled motor (24) and a transmission element (25) which is coupled to said motor (24) and to said carriage (5).

10. The apparatus according to claim 1, **characterized in that** said second angular elements (11) are provided in various formats, said second angular elements (11) of various formats all having identical shapes and different radii of curvature of said convex motorized conveyance surface (12), and therefore different space occupations in a radial direction with respect to the corner (26) that lies opposite from said convex motorized surface (12), thus defining different guiding channels (4) of different widths for products (X, Y, Z) of various dimensions together with said concave motorized conveyance surface (10) of the corresponding first angular element (9).
